# EUROPEAN PATENT SPECIFICATION

(11) **EP 1 783 033 B1**
(45) Date of publication and mention of the grant of the patent: **09.12.2015**
(21) Application number: 06255120.5
(22) Date of filing: 04.10.2006
(51) Int. Cl.: B62D 5/04, F16H 57/028, F16C 35/077

(54) **Electric power steering system equipped with worm gear clearance compensator**
Elektroservolenkung mit einem Spielausgleich beim Schneckengetriebe
Direction assistée électrique avec une vis sans fin équipée d'un rattrapage de jeu

(30) Priority: 02.11.2005 KR 20050104448
(43) Date of publication of application: 09.05.2007
(73) Proprietor: Mando Corporation, Pyeongtaek-si, Gyeonggi-do (KR)
(72) Inventor: Rho, Heedong, Wonju-si, Gangwon-do (KR)
(74) Representative: Jehle, Volker Armin

(56) References cited:
- EP-A1- 1 623 908
- EP-A1- 1 679 447
- EP-A2- 1 279 860
- JP-A- 2002 187 561
- JP-A- 2004 345 444
- JP-A- 2005 088 820
- US-A1- 2004 163 879

## Description

The present invention relates to an electric power steering system equipped with a worm gear clearance compensator.

Embodiments of the present invention relate to an electric power steering system including a steering wheel, a worm wheel mounted on the steering wheel, a worm shaft, a worm gear positioned on the worm shaft so as to mesh with the worm wheel, a motor for driving the worm shaft, a first worm shaft bearing, and an elastic member for applying a load to the first worm shaft bearing in the diametric direction so that, even when the worm gear is worn down, the worm gear continuously meshes with the worm wheel with no clearance.

Recent R&D in the vehicular steering system industry is directed to providing both safety (i.e. stable steering) and convenience (i.e. smooth and convenient steering). In line with such trends, various types of power steering systems have been developed, including those using hydraulic power and those using electric power. Electric power steering systems are being increasingly used in the industry, because they are lighter, consume less energy, and have a better fuel consumption ratio than hydraulic power steering systems.

Electric power steering systems use speed sensors and steering torque sensors so as to sense the driving conditions of vehicles. Based on the sensed conditions, control units (ECUs) actuate motors so as to assist in steering. At a low speed, the electric power steering systems provide flexible and convenient steering conditions and, at a high speed, provide tight and stable steering conditions. In addition, the systems enable rapid steering in the case of an emergency. As such, the electric power steering systems aim at providing drivers with optimal steering conditions.

Electric power steering systems are classified into various types according to the mounting position. For example, a C-EPS (Column Assist Type Electric Power Steering) system is positioned on a steering column together with an electric motor. The steering column fixes a steering shaft, which connects a steering wheel inside a driving compartment to a gearbox beneath the compartment, to a chassis. When the driver operates the steering wheel, resulting rotational force is transmitted to the gearbox via the steering system.

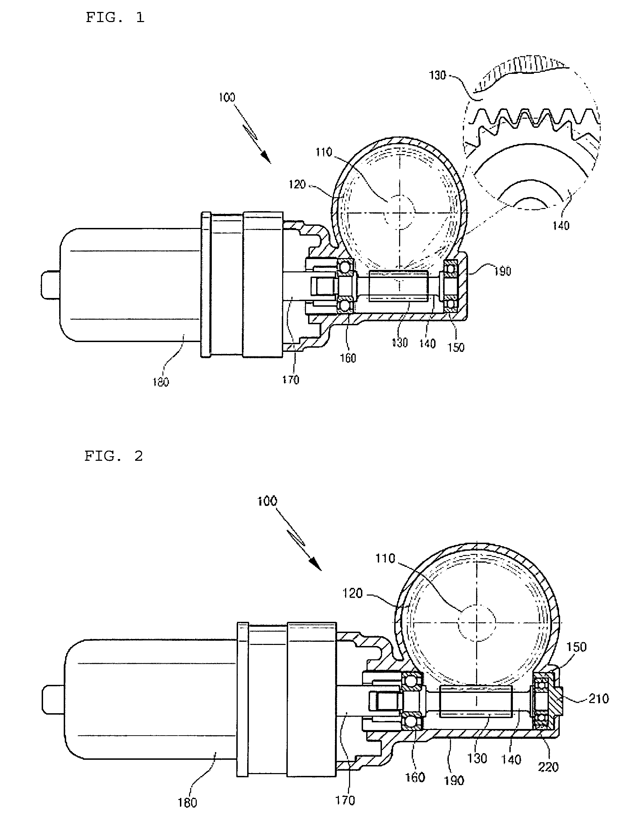

Referring to FIG. 1 a prior art C-EPS system includes a worm shaft 140; a worm gear 130 positioned on the middle of the worm shaft 140; first and second worm shaft bearings 150 and 160 positioned on both ends of the worm shaft 140, respectively, so as to support the worm shaft 140; a motor shaft 170 connected to the worm shaft 140; and a motor 180 for driving the worm shaft 140.

A worm wheel 120 is disposed on the circumference of the worm gear 130 so as to mesh with it. The worm wheel 120 is mounted on a steering wheel 110, which transmits rotational force from a steering wheel (not shown) operated by the driver, so that rotational force from the worm shaft 140, which is driven by the motor 180, is transmitted to the steering shaft 110.

Based on driving conditions of the vehicle, an ECU controls the operation of the motor 180 so that, in addition to the rotational force from the steering wheel operated by the user, rotational force from the worm shaft 140, which is driven by the motor 180, is transmitted to the steering shaft 110. As such, stable and smooth steering conditions are maintained.

The worm wheel 120 and the worm shaft 140, which mesh with each other in a worm gear mode, are mounted inside a housing 190 to be protected from the outside. However, intermeshing teeth of gears gradually wear down, as is clear from the enlarged view of worm gear teeth shown in FIG. 1 (dotted lines). As the degree of wear increases, the clearance between intermeshing teeth of the worm wheel 120 and the worm gear 130 increases. Consequently, the backlash increases, and rattles occur.

EP 1 679 447 A1 which has been published after the priority date of the present patent application describes a gear system comprising a housing, a shaft positioned in the housing, a worm wheel mounted on the shaft, a worm shaft, a worm gear formed on the worm shaft so as to mesh with the worm wheel, a motor for driving the worm shaft and a bearing module having an envelope surrounding an outer bearing ring, and a leaf spring radially pre-stressing the ring with respect to a central axis. The spring is disposed between the envelope and the ring. The spring is arched and has a concave side that is turned towards the axis. A retaining nose is placed on the spring to retain the ring axially with respect to the envelope.

EP 1 623 908 A1 which has also been published after the priority date of the present patent application describes an electric power steering device provided with two belleville springs for suppressing the axial movement of a worm rotated by a steering-assisting electric motor and having shaft portions at its both end portions, and limiting members for limiting the deflection amounts of the two belleville springs. The limiting members are respectively disposed at portions along the outer circumferences of the shaft portions at both end portions of the worm, the respective inner circumferential portions of the two belleville springs are formed into flat portions, the outer circumferential portions thereof are respectively formed into tapered portions having a taper shape, and the limiting members are made contact with the flat portions, thereby limiting the deflection amounts of the tapered portions. Hence, the limiting members can be provided without increasing the size of the worm serving as a small gear.

It is an object of the invention to at least partly avoid problems of the prior art.

In order to accomplish this object, there is provided an electric power steering system including a housing; a steering shaft positioned in the housing; a worm wheel mounted on the steering shaft; a worm shaft; a worm gear formed on the worm shaft so as to mesh with the worm wheel; a motor for driving the worm shaft; a first worm shaft bearing positioned on an end of the worm shaft; and an elastic member for applying a load to the first worm shaft bearing in a diametric direction, the elastic member being formed by double-folding a leaf spring in an approximately U-shaped configuration, both ends of the elastic member being supported by the housing, a central portion of the elastic member abutting an outer peripheral surface of the first worm shaft bearing.

In another aspect there is provided a bearing support for reducing play in an electric power steering device that includes a worm gear and a worm wheel, the bearing support including a resilient member having ends and a support portion, the ends being supported on a housing and the support portion in use engaging a bearing for the worm

gear, whereby the bearing is biased away from the housing.

The above and other objects, features and advantages of the present invention will be more apparent from the following detailed description taken in conjunction with the accompanying drawings, in which:
FIG. 1 is a sectional view showing the internal structure of a C-EPS system according to the prior art;
FIG. 2 is a sectional view showing the internal structure of a C-EPS system embodying the invention;
FIG. 3a is a lateral sectional view showing a case embodying the invention; and
FIG. 3b is a top view showing a case embodying the invention.

In the various figures, like reference signs refer to like parts.

Referring to FIG. 2 a C-EPS system includes a worm shaft 140; a worm gear 130 positioned on the middle of the worm shaft 140; first and second worm shaft bearings 150 and 160 positioned on respective ends of the worm shaft 140 so as to support the worm shaft 140; a motor shaft 170 connected to the worm shaft 140; and a motor 180 for driving the worm shaft 140.

A worm wheel 120 is disposed on the circumference of the worm gear 130 so as to mesh with it. The worm wheel 120 is mounted on a steering wheel 110, which transmits rotational force from a steering wheel (not shown) operated by the driver, so that rotational force from the worm shaft 140, which is driven by the motor 180, is transmitted to the steering shaft 110. A cap-shaped case 210 partially protrudes out of a housing 190 while enclosing a surface of the first worm shaft bearing 150, as well as its outer peripheral surface. An elastic member 220 is positioned inside the case 210 generally away from the worm wheel, as shown near the lower end of the case.

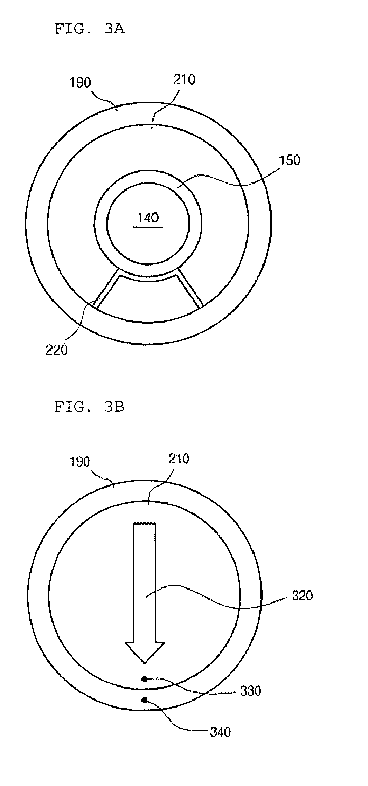

Referring to FIGs. 3a and FIG. 3b, the case 210 in this embodiment is made of rubber. In other embodiments it can be made of any other elastic material. The case 210 attaches the first worm shaft bearing 150 to the housing 190 with the worm shaft 140 inserted therein. In addition, the case 210 absorbs vibrations occurring when the worm shaft 140 and the worm wheel 120 mesh with each other and rotate together.

The upper side (as shown) of the interior of the case 210 near its upper end is supported by the housing 190, and the lower side thereof is provided with the elastic member 220 so as to resiliently support the first worm shaft bearing 150. As a result, a load is applied to the first worm shaft bearing 150 in the diametric direction so that, even when the worm gear 130 is worn down, the worm gear 130 and the worm wheel 120 continuously mesh with each other with no clearance.

The elastic member 220 has a generally central bearing support portion that is approximately part-circular, and that has two ends. Each end extends into a respective generally straight resilient portion that is disposed generally radially between the bearing support portion and the inside of the case 210.

In one embodiment, the elastic member 220 is formed by double-folding a leaf spring in an approximately U-shaped configuration. Both ends of the elastic member are supported by the housing, and a central portion of the elastic member abuts an outer peripheral surface of the first worm shaft bearing.

An identification mark, such as an arrow 320, is made on a surface of the case 210, which protrudes out of the housing 190, so as to indicate the direction of the elastic member 220. A first mark 330 is made near the end of the arrow 320. A second mark 340 is made on the external, vertical lower end of the housing 190, into which the case 210 is inserted, so that the arrow 320, the first mark 330, and the second mark 340 are on the same line. This enables the elastic member 220 to apply force to the first worm shaft bearing 150 in the vertically upper direction when the case 210 is assembled to the housing 190.

As mentioned above, the electric power steering system equipped with a worm gear clearance compensator according to the present invention is advantageous in that, when there is clearance between intermeshing teeth of the worm wheel and the worm gear, the case, which has elastic properties, and the elastic member, which applies a load to the bearing in the diametric direction, displace the worm shaft and compensate for the clearance. As such, the driver is provided with smooth and convenient steering conditions with no vibration and noise.

## Claims

1. An electric power steering system comprising:
a housing (190);
a steering shaft (110) positioned in the housing (190);
a worm wheel (120) mounted on the steering shaft (110);
a worm shaft (140);
a worm gear (130) formed on the worm shaft (140) so as to mesh with the worm wheel (120);
a motor (180) for driving the worm shaft (140);
a first worm shaft bearing (150) positioned on an end of the worm shaft (140); and
an elastic member (220) for applying a load to the first worm shaft bearing (150) in a diametric direction, the elastic member (220) being formed by double-folding a leaf spring in an approximately U-shaped configuration, both ends of the elastic member (220) being supported on the housing (190), a central portion of the elastic member (220) abutting an outer peripheral surface of the first worm shaft bearing (150);
wherein the first worm shaft bearing (150) and the elastic member (220) are inserted into a case (210) and fixed to the housing (190); and
wherein an arrow (320) and a first mark (330) are made on a portion of the case (210), the portion being exposed out of the housing (190), so as to indicate a direction of the leaf spring.

2. An electric power steering system according to claim 1, wherein a second mark (340) is made on a vertical lower portion of the housing (190), the case (210) being mounted on the vertical lower portion, so as to fix a position of the leaf spring when the case (210) is assembled to the housing (190).

## Patentansprüche

1. Elektrisches Servolenkungssystem mit:
einem Gehäuse (190);
einer Lenkspindel (110), die in dem Gehäuse (190) positioniert ist;
einem Schneckenrad (120), das an der Lenkspindel (110) angebracht ist; einer Schneckenwelle (140);
einem Schneckengetriebe (130), das an der Schneckenwelle (140) ausgebildet ist, um mit dem Schneckenrad (120) in Eingriff zu gelangen;
einem Motor (180) zum Treiben der Schneckenwelle (140);
einem ersten Schneckenwellenlager (150), das an einem Ende der Schneckenwelle (140) positioniert ist; und
einem elastischen Element (220) zum Aufbringen einer Last auf das erste Schneckenwellenlager (150) in diametrischer Richtung, wobei das elastische Element (220) durch doppeltes Falten einer Blattfeder in ungefähr U-förmiger Konfiguration gebildet wird, wobei beide Enden des elastischen Elements (220) an dem Gehäuse (190) gestützt werden und ein mittlerer Abschnitt des elastischen Elements (220) an der äußeren Umfangsfläche des ersten Schneckenwellenlagers (150) anliegt;
wobei das erste Schneckenwellenlager (150) und das elastische Element (220) in einen Kasten (210) eingefügt sind und an dem Gehäuse (190) befestigt sind; und
wobei ein Pfeil (320) und eine erste Markierung (330) auf einem Abschnitt des Kastens (210) angebracht werden, wobei der Abschnitt von dem Gehäuse (190) freigelegt ist, um die Richtung der Blattfeder anzuzeigen.

2. Elektrisches Servolenkungssystem nach Anspruch 1, wobei eine zweite Markierung (340) auf einem vertikalen unteren Abschnitt des Gehäuses (190) angebracht wird, wobei der Kasten (210) auf dem vertikalen unteren Abschnitt angeordnet wird, um die Position der Blattfeder zu fixieren, wenn der Kasten (210) mit dem Gehäuse (190) zusammengebaut wird.

## Revendications

1. Système de direction à assistance électrique comprenant :
un boîtier (190) ;
un arbre de direction (110) positionné dans le boîtier (190) ;
une roue hélicoïdale (120) montée sur l'arbre de direction (110) ;
un arbre de vis sans fin (140) ;
une vis sans fin (130) formée sur l'arbre de vis sans fin (140) de façon à s'engrener avec la roue hélicoïdale (120) ;
un moteur (180) pour entraîner l'arbre de vis sans fin (140) ;
un premier palier (150) d'arbre de vis sans fin positionné sur une extrémité de l'arbre de vis sans fin (140) ; et
un élément élastique (220) pour appliquer une charge au premier palier (150) d'arbre de vis sans fin dans un sens diamétral, l'élément élastique (220) étant formé par un double repliage d'un ressort à lames dans une configuration approximativement en forme de U, les deux extrémités de l'élément élastique (220) étant supportées sur le boîtier (190), une partie centrale de l'élément élastique (220) venant buter sur une surface périphérique extérieure du premier palier (150) d'arbre de vis sans fin ;
dans lequel le premier palier (150) d'arbre de vis sans fin et l'élément élastique (220) sont insérés dans un boîtier (210) et fixés au boîtier (190) ; et
dans lequel une flèche (320) et une première marque (330) sont faites sur une partie du boîtier (210), la partie étant exposée hors du boîtier (190), de façon à indiquer un sens du ressort à lames.

2. Système de direction à assistance électrique selon la revendication 1, dans lequel une deuxième marque (340) est faite sur une partie inférieure verticale du boîtier (190), le boîtier (210) étant monté sur la partie inférieure verticale, de façon à fixer une position du ressort à lames lorsque le boîtier (210) est assemblé sur le boîtier (190).
